# EUROPEAN PATENT APPLICATION

(11) **EP 2 631 597 A1**
(43) Date of publication of application: **28.08.2013**
(21) Application number: 13000777.6
(22) Date of filing: 14.02.2013
(51) Int. Cl.: G01C 21/36, B60L 11/18, G08G 1/0968, G01C 21/34, G01C 21/32

(54) **Navigation system and method for operating an electric vehicle**

(30) Priority: 22.02.2012 EP 12001176
(71) Applicant: Harman Becker Automotive Systems GmbH, 76307 Karlsbad (DE)
(72) Inventor: Scholl, Kay-Ulrich, 76307 Karlsbad (DE)
(74) Representative: Koch Müller Patentanwaltsgesellschaft mbH

(57) **Abstract**

Navigation system (20) and method for operating an electric vehicle (10) comprising the steps:
- ascertaining a selection of a charging station (90, 110) based on a user input, wherein a stored position (P90) of the charging station (90) is the ultimate destination (home),
- ascertaining a current position (100) of the electric vehicle (10),
- ascertaining a reachability of a target position (103) separated from the current position (100) and the stored position (P90) of the charging station (90, 110), wherein the ascertainment is based on the current position (100) of the electric vehicle (10) and the stored position (P90) of the selected charging station (90, 110) and the current state of charge (C) of the energy storage device (18), so that the additional position (103) and subsequently the stored position (P90) of the selected charging station (90, 110) are reachable with the current state of charge (C) of the energy storage device (18), and
- outputting the reachability of the target position (103) by means of an information item (104, 210, 220) via an output device (25) of the navigation system (20).

## Description

The present invention concerns a navigation system and a method for operating an electric vehicle.

A navigation system of a vehicle has an internal or external database that contains so-called Points of Interest (POIs) in different categories. For example, filling stations are included as POIs. Some motor vehicles are designed to calculate fuel consumption and a remaining range. For example, there is an indication as to the distance (miles or kilometers driven) within which a filling station must be found.

From WO 2010/150665 A1 a device and method is known. The device includes a current position sensor, which detects a current position of the vehicle, a charge amount sensor which detects a battery charge amount, a database which registers the information relating to the battery charge amount increase facility, and a controller. The controller registers the current position of the vehicle in the database as a location of the battery charge amount increase facility. When the driver or passenger operates an operating switch to search for a battery charge amount increase point in the vicinity of the current vehicle position, the additionally registered battery charge amount increase point is displayed on the display together with the battery charge amount increase points registered in the database in advance. As a result, the number of usable battery charge amount increase points registered in the database can be increased every time the battery is charged. Further, a possible travel distance of the vehicle can be calculated from the charge sensor of the battery detected by the charge sensor detection function of the navigation controller, and therefore the likelihood that no battery charge amount increase points exist within a possible travel distance range can be predicted. When it is predicted that no battery charge amount increase points are likely to exist, a warning is preferably displayed on the display. The additionally registered battery charge amount increase point is taken into account during the prediction, and therefore the likelihood that no battery charge amount increase points exist can be reduced.

From the EP 2 368 750 A2 an information processing apparatus and a discharge control method is known for discharging a battery of a motor-driven movable body (vehicle) an another motor-driven movable body (vehicle) to be charged. The information processing apparatus includes a user input unit to input the information about the discharge amount. The user input unit may restrict user input so that a third charging place not reachable by the motor-driven movable body of the discharge source before the discharge or a fourth charging place not reachable by the motor driven movable body of the discharge destination before the discharge is not selected.

From the US 2012/0019204 A1 a cart navigation system is known. If a route has not yet been set in a car navigation apparatus, and when a vehicle approaches a specific crossing or a charging station located ahead of a current-driving road, or when remaining charge of a battery becomes less, the navigation apparatus retrieves and displays information about charging stations of the respective branching directions. When the vehicle approaches a specific crossing, the navigation apparatus guides information for indicating whether or not a charging station is present, a distance, and whether or not the vehicle can reach the charging station with respect to each of directions branched from the specific crossing. Also, when a charging station is located ahead of the road, the navigation apparatus retrieves charging stations of the respective branching destinations at a specific crossing located in front of the road, and judges whether or not the vehicle can be driven up to the respective retrieved charging stations.

The object of the invention is to improve a method for operating an electric vehicle.

This object is attained by a method with the features of independent claim 1. Advantageous refinements are the subject matter of dependent claims and are contained in the description.

Accordingly, a method for operating an electric vehicle is provided. The method may comprise the steps:

Ascertaining a selection of a charging station based on a user input. A stored position of the charging station is the ultimate destination (home).

Ascertaining a current position of the electric vehicle.

Ascertaining a reachability of a target position separated from the current position and the stored position of the charging station. The ascertainment is based on the current position of the electric vehicle and the stored position of the selected charging station and the current state of charge of the energy storage device, so that the additional position and subsequently the stored position of the selected charging station are reachable with the current state of charge of the energy storage device.

Outputting the reachability of the target position by means of an information item via an output device of the navigation system.

The invention has the additional object of specifying an improved navigation system.

This object is attained by the navigation system with the features of independent claim 11. Advantageous refinements are contained in the description.

Accordingly, a navigation system for an electric vehicle is provided. The navigation system has a computing unit. The navigation system may have an internal and/or external database. The navigation system may have a position finding unit.

The computing unit is configured to ascertain a selection of a charging station based on a user input, wherein a stored position of the charging station is the ultimate destination. The ultimate destination may be a home destination.

The computing unit is configured to ascertain a current position of the electric vehicle.

The computing unit is configured to ascertain a reachability of a target position separated from the current position and the stored position of the charging station. The ascertainment is based on the current position of the electric vehicle and the stored position of the selected charging station and the current state of charge of the energy storage device, so that the additional position and subsequently the stored position of the selected charging station are reachable with the current state of charge of the energy storage device.

The computing unit is configured to output the reachability of the target position by means of an information item via an output device of the navigation system. The output device may be a display for displaying the information item.

The embodiments described below relate to both the method and to the navigation system. Functions of the navigation system can be derived from method features here. Method features are accordingly evident from functions of the navigation system.

According to one embodiment the information item may be output on a map view by means of a symbol.

According to one embodiment the information item may be output on a map view by means of an area marking. The area marking may be accomplished by means of a line or a polygon, wherein the line or polygon encloses the area. It is also possible to highlight the marking area, for example by raising it out of the plane of the map (in height/depth) in animated fashion.

According to one embodiment the method may comprise the additional step of displaying the selection of the charging station by a selection item.

According to one embodiment the selection item may have a marking and/or symbol and/or text, particularly on a map view.

According to one embodiment the reachability of the target position may be ascertained after the selection of the charging station with the stored position of the charging station being the ultimate destination.

According to one embodiment the method may comprise the additional step of additionally ascertaining a direct reachability of the stored position of the charging station based on a current charge state of the energy storage device and a current position of the electric vehicle. The method may comprise the additional step of outputting the direct reachability via the output device of the navigation system by means of a additional information item. In the following the direct reachability of the stored position is referred as first reachability, whereas the reachability of the target position and subsequently the ultimate destination is referred to as the second reachability.

According to one embodiment the method may comprise the additional step of storing an entry associated with the charging station with a position of the charging station in a database of a navigation system of the electric vehicle, if the entry associated with the charging station is not present in the database. The storing may be initiated by a connection to the charging station.

According to one embodiment an attribute associated with the charging station may be stored in an entry in the database. The reachability of the target position and/or the direct reachability of the stored position may be determined as a function of the attribute. According to one embodiment a third information item associated with the attribute may be output.

According to one embodiment a storing of the entry may be displayed. During display of the storage, the entry can be modified or deleted based on a user input.

According to one embodiment a check may be performed as to whether an entry associated with the charging station is present in a database of a navigation system of the electric vehicle. The check may be performed, by a computing unit of the navigation system. The checking may be initiated by the connection to the charging station.

According to one embodiment the computing unit may be connected to an interface in order to identify a connection of the electric vehicle to a charging station for charging of an energy storage device of the electric vehicle.

According to one embodiment the computing unit may be configured to check, initiated by the connection to the charging station, whether an entry associated with the charging station is present in the navigation system's database.

According to one embodiment the computing unit may be configured to store the entry associated with the charging station in the database along with a position of the charging station, if the entry associated with the charging station is not already present in the database.

The check for the entry in the database can take place according to different embodiments. For example, the check takes place in that a position is ascertained by means of, e.g., the position finding unit during the connection. If the ascertained position for a charging station is already present in the database, the check is ended. For example, the position is present in the database when the position ascertained by means of the position finding unit and the position in the database differ from one another by less than a maximum distance, for example 30 meters. In an alternative embodiment, identification is associated with each charging station, for example an identifier that is transmitted by the charging station to the navigation system. If the transmitted identification is identical to an identification stored in the database, the charging station is already present as an entry in the database. In other embodiments, other associations are possible, for example by means of a radio network or a transponder.

The applicable position is ascertained, for example, as a geographic position in what is known as the Receiver INdependent EXchange Format (RINEX). Alternatively, the position is a converted address, converted for a road network, for example with state, city, street, and house number.

The user has the need to use a specific charging station, for example because this charging station is at the user's home or is easily accessible at the home of relatives, and because the trip is supposed to end precisely at this point, being the ultimate destination. The entry stored in the database may be selected based on user input. The selected entry may displayed in the display by means of an information item - for example, by means of a symbol or text.

The target position can also be called a waypoint. The driver first wishes to reach this target position and also to reach the position of the charging station in the selected entry with the charge remaining in the energy storage device of the electric vehicle. For the reachability, therefore, the additional position and subsequently the stored position of the charging station are reachable with the current state of charge of the energy storage device.

The reachability of the target position is output by means of a information item via the output device, e.g. on the display of the navigation system. The information item is text or a symbol, for example.

According to one embodiment, an attribute associated with the charging station may be stored in the entry in the database. The attribute associated with the charging station may be a charging power or a number of charging slots or a type (private/public/business), or a time period of access, or a rate, etc. The reachability may be determined as a function of the attribute. For example, based on additional user input, charging stations with specific attribute values are not identified in the display as reachable and/or selectable.

According to one embodiment, another information item associated with the attribute is displayed. The third information item may be a symbol or text that is displayed in a text field in the display.

According to one embodiment, the information item may be displayed by means of a symbol, preferably directly on a map view. The symbol on the map may be shown at the associated position of the charging station in the road network.

The embodiments described above are especially advantageous, both individually and in combination. All embodiments may be combined with one another. Some possible combinations are explained in the description of the exemplary embodiments from the figures. However, these possibilities of combinations of the embodiments introduced there are not exhaustive.

The invention is explained in detail below through exemplary embodiments with reference to drawings.

They show
- Fig. 1: a schematic representation of an electric vehicle, and
- Fig. 2: a schematic map view.

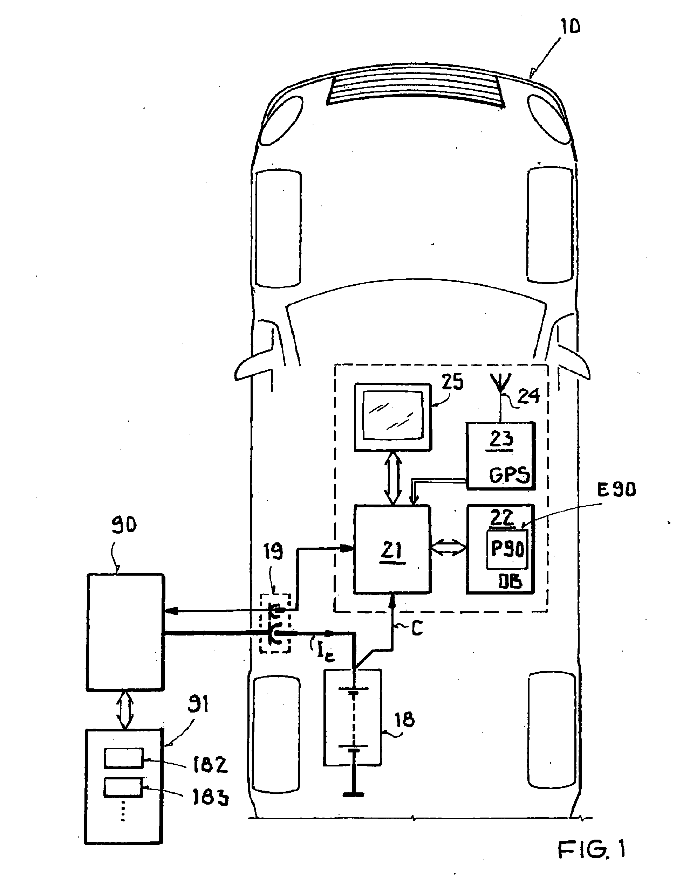

Shown schematically in Fig. 1 is an electric vehicle 10 with a navigation system 20. The electric vehicle 10 has an energy storage device, for example in the form of a rechargeable battery 18. A charge state C of the energy storage device 18 is transmitted to the navigation system 20. The energy storage device 18 can be connected to a charging station 90 through an interface 19 for charging of the energy storage device 18 with a charging current I_{C}. The interface 19 is, for example, a plug 19, in particular for three-phase power. Alternatively the interface 19 comprises coils for magnetic coupling.

In addition, a data connection is provided between the charging station 19 and the navigation system 20. In the exemplary embodiment from Fig. 1, the charging station 90 and the navigation system 20 are likewise connected through the interface 19. Alternatively, a radio connection can be provided between the charging station 90 and the navigation system 20.

The navigation system 20 has a computing unit 21. The computing unit 21 is, for example, a CPU, a microcontroller uC, or the like. The computing unit 21 is connected to a position finding unit 23. The position finding unit 23 is, for example, a satellite receiver 23 with an antenna 24 that is configured to receive satellite signals (GPS, GLONASS, Galileo, etc.). In the situation of the exemplary embodiment shown in Fig. 1, the computing unit 21 of the navigation system 20 is connected to the charging station 90 through the interface 19. The connection to the charging station 90 exists at least during the charging process and is broken when the electric vehicle 10 is driven away from the charging station 90.

The navigation system 20 has a display 25, which is connected to the computing unit 21 so that a map view may be output. The display 25 in the exemplary embodiment from Fig. 1 is implemented as a touch screen 25, wherein user inputs can be made through the touch-sensitive surface of the touch screen 25. Alternatively a beamer or audio voice output can be used.

In addition, the computing unit 21 of the navigation system 20 is connected to a storage unit 22 configured as a database. In the exemplary embodiment from Fig. 1, the database 22 is integrated in the navigation system 20. Alternatively, the database can be connected as an external device, for example through a network connection to the computing unit 21 of the navigation system 20.

When the electric vehicle 10 is connected to the charging station 90 in order to charge the energy storage device 18 of the electric vehicle 10 through the interface 19, for example by means of a charging plug, the energy storage device 18 is charged by the charging current I_{C}. Initiated by the connection to the charging station 90 through the interface 19, an entry E90 associated with the charging station 90 is stored with a position P90 of the charging station 90 in the database 22 of the navigation system 20, if a check carried out by the navigation system 20 produces the result that no entry associated with the charging station 90 is present in the database 22.

In the exemplary embodiment from Fig. 1, the position P90 of the charging station 90 is ascertained by means of the position finding unit 23. Alternatively, the position P90 of the charging station 90 can also be stored in a storage unit 91 of the charging station 90. In the exemplary embodiment from Fig. 1, the storage unit 91 of the charging station 90 contains a number of attributes 182, 183 associated with the charging station 90 such as, for instance, a charging power (max. current), a number of charging plugs, whether the charging station 90 is private or public, access times, rates, etc.; which are stored as attributes in the entry E90 for the charging station 90 in the database 22.

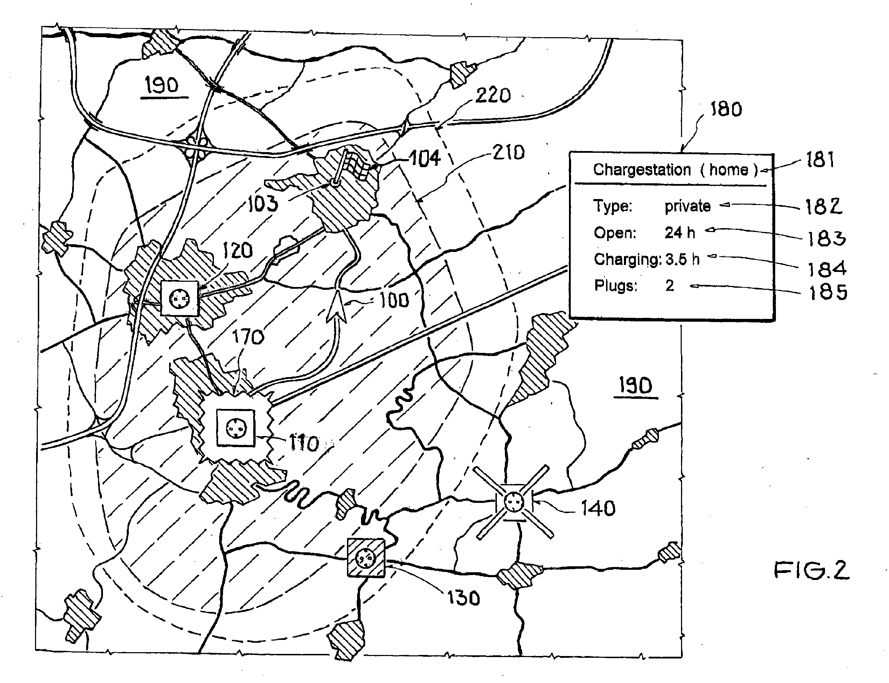

In Fig. 2, a map view 190 is shown schematically, which is displayed by means of, e.g., the touch screen 25 of the navigation system 20. Displayed are most likely targeted charging stations 110, 120, 130, 140 and their reachability in electric vehicles. The symbols 110, 120, 130, 140 in Fig. 2 relate to corresponding charging stations, whereas symbol 110 refers to the charging station 90 of Fig. 1.

Direct information about reachability of important targets 110, 120, 130, 140, 103 is provided to a driver of an electric vehicle in order to relieve fears about running out of energy while driving. Important aspects to consider are, e.g., the next target 110, 120, 103 and especially most likely targets 110, 120 which are partially learned automatically by the system.

When driving the electric vehicle the driver mostly worries about whether or not he will be able to reach his target 103, 110. Even if he reaches his target 103, he worries whether he'll be able to return to home 110. Drivers want to be assured that a target 103 and the ultimate destination 90, 110 at home (with Symbol 110) can be reached. To assure this a selection of a charging station 90, 110 is ascertained based on a user input. The stored position P90 of the charging station 90, 110 is here the ultimate destination at home. A current position 100 of the electric vehicle 10 is ascertained and shown on the map view 190.

A reachability of a target position 103 separated from the current position 100 and the stored position P90 of the charging station 90, 110 is ascertained. The ascertainment is based on the current position 100 of the electric vehicle 10 and the stored position P90 of the selected charging station 90, 110 and the current state of charge C of the energy storage device 18, so that the additional position 103 and subsequently the stored position P90 of the selected charging station 90, 110 are reachable.

Fig. 2 shows the outputting of the reachability of the target position 103 by means of an information item 104. In one embodiment of Fig. 2 the information item 104 is at least a flag symbol 104. In the following the reachability of the target position 103 and subsequently the home position 90, 110 is referred to as a second reachability, whereas a direct reachability to a charging station 90,110 is referred to as a first reachability.

In the exemplary embodiment from Fig. 2, the first reachability of the stored position P90 of the charging station 90 from Fig. 1 is ascertained on the basis of a current charge state C of the energy storage device 18 and a current position 100 of the electric vehicle 10. In the map view 190 from Fig. 2, the first reachability is displayed on the touch screen 25 of the navigation system 20 by means of a first information item using symbols 110, 120, 130, 140. Each symbol 110, 120, 130, 140 here stands for a charging station, for example the symbol 110 stands for the charging station 90 from Fig. 1.

The first reachability can be indicated by different colors of the symbols, for example green for "easy," yellow for "tight" and red for "not possible." In Fig. 2 the symbols 110, 120, 130, 140 are different, with the symbols 110, 120 indicating "easy," the symbol 130 indicating "tight" and the symbol 140 indicating "not possible."

Also shown in the map view 190 in Fig. 2 is the current position 100 in the road network of the electric vehicle 10. In addition, it can be seen that the user has retrieved the charging station 110 from the database, for example by touching the touch screen 25. The selection of the charging station 110 is highlighted by a symbol 170 in the map view. The selection is associated with a function that indicates that the driver wishes to return to this charging station 110 again at the end of the trip.

Using the position of the ultimate destination 110 and the current position 100 as a basis, the computing unit 21 of the navigation system 20 is configured to calculate the second reachability. According to one embodiment of Fig. 2, the second reachability is indicated by an area marker 210, 220 in the touch screen, and is shown schematically in Fig. 2. The area marker 210 here means that every location within the boundary line 210 can be reached and subsequently enough remaining charge will be left that the electric vehicle 10 can easily reach the charging station 90 indicated by symbol 110. In contrast, the additional boundary line 220 of the area indicates that these destinations are only "barely reachable" in order to subsequently return to the charging station 90 indicated by symbol 110. It is shown schematically in the exemplary embodiment from Fig. 2 that the target position 103, also referred to as waypoint 103, can be reached under the premise that it will be possible to return to the charging station 90 at symbol 110.

As an alternative to the explanation relating to Fig. 2, the area marker is accomplished by coloring the unreachable region of the map 190 red, and the barely reachable region of the map 190 yellow. The region of the map 190 that can be reached is not colored, for example.

According to one embodiment the driver can see the following information at any time:
1. An indication whether the current target 103 can be reached.
2. An indication whether the starting point 110 of this trip can be reached (go there and return).
3. An indication whether a specified home 110 can be reached afterwards (go there and home).
4. An indication whether any known charging station 110, 120 can be reached afterwards (known charging stations 110, 120 can be determined by using services).
5. An indication whether any already used charging station 110 can be reached afterwards (already used charging stations may be private ones, which are not available to the public, this contains kind of a learning functionality).

All indications are categorized: "easy," "tight," "not possible," and/or others.

The invention is not restricted to the embodiments shown in Figures 1 and 2. For example, it is possible to use a different indication of reachability, such as, e.g., a list of the charging stations 110, 120 and waypoints 103. The list can be projected onto a window of the vehicle by means of a projector, for example. It is also possible to use a different type of area marker, such as, e.g., color highlighting. The functionality of the system shown in Fig. 1 can be used to especially good advantage for a navigation system of a purely electric powered vehicle.

### List of reference characters

- 10: electric vehicle
- 18: energy storage device, rechargeable battery
- 19: interface
- 20: navigation system
- 21: computing unit, CPU, uC
- 22: database
- 23: position finding unit, GPS receiver
- 24: antenna
- 25: display, touch screen
- 90: charging station
- 91: storage unit
- 100: current position
- 103: target position, additional position
- 104: flag symbol
- 110, 120, 130, 140: symbol, charging station
- 170: marking
- 180: PopUp, Infobox
- 181, 182, 183, 184, 185: attribute
- 190: map
- 210, 220: area
- E90: entry, database entry
- C: charge state
- I_{C}: charging current
- P90: position

## Claims

1. Method for operating an electric vehicle (10) comprising the steps:
- ascertaining a selection of a charging station (90, 110) based on a user input, wherein a stored position (P90) of the charging station (90, 110) is the ultimate destination (home),
- ascertaining a current position (100) of the electric vehicle (10),
- ascertaining a reachability of a target position (103) separated from the current position (100) and the stored position (P90) of the charging station (90, 110), wherein the ascertainment is based on the current position (100) of the electric vehicle (10) and the stored position (P90) of the selected charging station (90, 110) and the current state of charge (C) of the energy storage device (18), so that the additional position (103) and subsequently the stored position (P90) of the selected charging station (90, 110) are reachable with the current state of charge (C) of the energy storage device (18), and
- outputting the reachability of the target position (103) by means of an information item (104, 210, 220) via an output device (25) of the navigation system (20).

2. Method according to claim 1,
- wherein the information item (104) is output on a map view (190) by means of a symbol (104).

3. Method according to one of the preceding claims,
- wherein the information item (210, 220) is output on a map view (190) by means of an area marking (210, 220).

4. Method according to one of the preceding claims, comprising the additional step:
- displaying the selection of the charging station (90, 110) by a selection item.

5. Method according to claim 4,
- wherein the selection item has a marking (170) and/or symbol and/or text, particularly on a map view (190).

6. Method according to one of the preceding claims,
- wherein the reachability of the target position (103) is ascertained after the selection of the charging station (90, 110) with the stored position (P90) of the charging station (90, 110) being the ultimate destination.

7. Method according to one of the preceding claims,
- ascertaining additionally a direct reachability of the stored position (P90) of the charging station (90, 110) based on a current charge state (C) of the energy storage device (18) and a current position (100) of the electric vehicle (10), and
- outputting the direct reachability via the output device (25) of the navigation system (20) by means of a additional information item (110, 120, 130, 140).

8. Method according to one of the preceding claims,
- storing an entry (E90) associated with the charging station (90, 110) with a position (P90) of the charging station (90, 110) in a database (22) of a navigation system (20) of the electric vehicle (10), if the entry (E90) associated with the charging station (90, 110) is not present in the database (22), the storing being initiated by a connection to the charging station (90, 110).

9. Method according to one of the preceding claims,
- wherein an attribute (181, 182, 183, 184, 185) associated with the charging station (90, 110) is stored in an entry (E90) in the database (22),
- wherein the reachability of the target position (103) and/or the direct reachability of the stored position (P90) is determined as a function of the attribute (181, 182, 183, 184, 185),
and/or
- wherein a third information item (180) associated with the attribute (181, 182, 183, 184, 185) is output.

10. Method according to one of the preceding claims,
- wherein a storing of the entry (E90) is displayed,
- wherein, during display of the storage, the entry (E90) can be modified or deleted based on a user input.

11. Navigation system (20) of an electric vehicle (10) comprising a computing unit (21),
- wherein the computing unit (21) is configured to ascertain a selection of a charging station (90, 110) based on a user input, wherein a stored position (P90) of the charging station (90, 110) is the ultimate destination (home),
- wherein the computing unit (21) is configured to ascertain a current position (100) of the electric vehicle (10),
- wherein the computing unit (21) is configured to ascertain a reachability of a target position (103) separated from the current position (100) and the stored position (P90) of the charging station (90, 110), wherein the ascertainment is based on the current position (100) of the electric vehicle (10) and the stored position (P90) of the selected charging station (90, 110) and the current state of charge (C) of the energy storage device (18), so that the additional position (103) and subsequently the stored position (P90) of the selected charging station (90, 110) are reachable with the current state of charge (C) of the energy storage device (18), and
- wherein the computing unit (21) is configured to output the reachability of the target position (103) by means of an information item (104, 210, 220) via an output device (25) of the navigation system (20).
